# EUROPÄISCHE PATENTSCHRIFT

(11) **EP 2 368 738 B1**
(45) Veröffentlichungstag und Bekanntmachung des Hinweises auf die Patenterteilung: **10.12.2014**
(21) Anmeldenummer: 11001355.4
(22) Anmeldetag: 18.02.2011
(51) Int. Cl.: B60J 10/00, B23P 19/04

(54) **Verfahren, Vorrrichtung und beweglicher Applikationskopf zur Montage einer Dichtung an einer KFZ-Karosserie oder einer Applikationsplatte**
Method, device and mobile application head for assembling a seal to a motor vehicle chassis or an application plate
Procédé, dispositif et tête d'application mobile pour l'assemblage d'un joint d'étanchéité sur une chassis de véhicule automobile ou une plaque d'application

(30) Priorität: 19.03.2010 DE 102010011976
(43) Veröffentlichungstag der Anmeldung: 28.09.2011
(73) Patentinhaber: ThyssenKrupp System Engineering GmbH, 74076 Heilbronn (DE)
(72) Erfinder: Maier, Michael, 66625 Nohfelden (DE); Haupenthal, Horst-Günter, 54411 Hermeskeil (DE)
(74) Vertreter: Kirchner, Sven

(56) Entgegenhaltungen:
- DE-A1- 10 023 332
- DE-A1- 10 138 781
- DE-A1-102007 010 421
- DE-B3-102006 003 095
- US-A- 5 201 106

## Beschreibung

Die Erfindung betrifft ein Verfahren, eine Vorrichtung und einen beweglichen Applikationskopf zum Anbringen einer ganz oder teilweise umlaufenden Dichtung an einer Fahrzeugkarosserie, einem Fahrzeugteil oder einer Applikationsplatte zur anschließenden Anbringung vorzugsweise an einer Fahrzeugtür oder an anderen Fahrzeugöffnungen oder Anbauteilen nach den Ansprüchen 1, 4 und 9.

Aus der DE 101 38 781 A1 ist ein Verfahren zur Anbringung einer Dichtung an einer Fahrzeugtür bekannt, bei dem eine auf einer Rolle als Endlosprofil vorliegende Dichtung von der Rolle abgezogen und mit einer Klebefläche entlang einer für die Anbringung vorgesehenen Linie auf eine Fläche der Fahrzeugtür umlaufend aufgerollt wird. Zur Durchführung dient dabei eine Vorrichtung, umfassend eine Andruckrolle, über die die Dichtung geführt ist, sowie Führungsmittel zur Führung der Dichtung vor der Aufbringung, wobei die Vorrichtung für die umlaufende Anbringung der Dichtung an der Fahrzeugtür um eine Achse um 360° schwenkbar ist. Über die Art der Führung der Dichtung von der Rolle zur und an der Applikationsvorrichtung ist dieser Schrift nichts zu entnehmen. Bei der Zuführung der Dichtung von einer stationären Vorratsrolle zu dem umlaufend zu bewegenden Applikationskopf kann es dazu kommen, dass sich die Dichtung, z.B. um die Achsen des Roboterarmes verwickelt und verklemmt. Außerdem kann es auf dem relativ langen Wege von der Vorratsrolle zum Applikationskopf zu Längenveränderungen der Dichtung kommen.

In der DE 10 2006 003 095 B3 ist ein Verfahren und eine Anlage zum Applizieren einer umlaufenden Dichtung an einem Verschlussteil, insbesondere einer Tür, eines Kraftfahrzeuges beschrieben, wobei das Applizieren in zwei Stufen erfolgt. In einer ersten Stufe wird mit einem stationären Anrollkopf eine von einem Endlosdichtungsband abgelängte Dichtung auf am Anrollkopf vorbeibewegte Halteleisten einer Applikationsplatte gesteckt. In einer zweiten Stufe wird die Applikationsplatte mit der aufgesteckten Dichtung an die Türöffnung oder die Dichtungsfläche der Tür selbst angedrückt. Zum Anbringen der Dichtung an der Applikationsplatte wird der Umfang der Applikationsplatte an dem stationären Anrollkopf entlang geführt.

Auch aus der EP 2067645 A2 ist es bekannt, eine Applikationseinheit stationär auszubilden und dann die Fahrzeugtür an der stationären Andruckrolle mit Hilfe eines Roboterarmes entlang der für die Anbringung der Dichtung vorgesehenen Linie zu bewegen. Um Geschwindigkeitsschwankungen bei der Zuführung der Dichtung zu beherrschen, wird die Relativgeschwindigkeit zwischen Dichtung und Applikationseinheit unmittelbar an der Stelle der Verklebung erfasst.

Ferner ist aus der US 5 201 106 A ein beweglicher Applikationskopf gemäß Anspruch 9 bekannt.

Der Erfindung liegt die Aufgabe zu Grunde, ein Verfahren, eine Vorrichtung und einen beweglichen Applikationskopf zum Anbringen einer umlaufenden Dichtung an einer Fahrzeugkarosserie, einem Fahrzeugteil oder einer Applikationsplatte vorzuschlagen, bei dem Probleme bei der Zuführung der Dichtung zu den Führungsrollen und/oder der Andruckrolle vermieden und der Applikationskopf ungehindert umlaufend an der Kraftfahrzeugkarosserie, dem Fahrzeugteil oder der Applikationsplatte entlanggeführt werden kann.

Zur Lösung dieser Aufgabe ist ein Verfahren gemäß Anspruch 1, eine Vorrichtung gemäß Anspruch 4 und ein beweglicher Applikationskopf gemäß Anspruch 9 vorgesehen. Die Unteransprüche 2 und 3, 5 bis 8 sowie 10 enthalten sinnvolle ergänzende Verfahrensvorschläge bzw. Vorrichtungsmerkmale.

Das erfindungsgemäße Verfahren sieht vor, dass die Dichtung vorzugsweise als Endlosprofil von einer Vorratsrolle abgezogen und mit mindestens einer Windung auf eine Zwischenspeicherrolle aufgewickelt wird, die fest oder drehbar mit dem Applikationskopf verbunden ist und dass die Zwischenspeicherrolle gemeinsam mit dem Applikationskopf zum Anbringen der Dichtung mit Hilfe einer Handhabungsvorrichtung oder eines Roboters entlang einer für die Anbringung der Dichtung vorgesehenen Linie bewegt wird. Üblicherweise sollte mindestens so viel Dichtung auf der Zwischenspeicherrolle speicherbar sein wie für die Anbringung einer Dichtung, z.B. am Umfang einer Tür erforderlich ist. Während der Umlaufbewegung wird die Dichtung von der Zwischenspeicherrolle, vorzugsweise über angetriebene Führungsrollen dem Applikationskopf zugeführt und von dort über Führungsmittel und/oder vorzugsweise durch gegenüberliegende Führungsrollen und mit Hilfe einer Andruckrolle auf die vorgesehene Klebefläche der Fahrzeugkarosserie oder des Fahrzeugteiles aufgerollt. Als Besonderheit kann die Dichtung auf Halteleisten an einer Applikationsplatte aufgerollt oder aufgesteckt werden. Gleichzeitig wird die Zwischenspeicherrolle relativ zum Applikationskopf gedreht, wobei die Dichtung gegebenenfalls bedarfsabhängig zusätzlich auf- oder abgewickelt wird. Alternativ oder zusätzlich zur Drehung der Zwischenspeicherrolle kann die Dichtung auch auf drehbaren Rollen am Umfang der Zwischenspeicherrolle bewegt werden.

Die erfindungsgemäße Vorrichtung zum Anbringen einer Dichtung, vorzugsweise zur Durchführung des Verfahrens ist gekennzeichnet durch einen an einem Roboterarm oder einer sonstigen Handhabungseinrichtung dreh- oder schwenkbar befestigten Applikationskopf mit einer oder mehreren drehbar oder fest an dem Applikationskopf befestigten Zwischenspeicherrolle/en zum Auf- und/oder Abrollen von ein oder mehreren Windungen der Dichtung, wobei vorzugsweise Applikationskopf und Zwischenspeicherrolle gemeinsam um ca. 360 Grad oder mehr gegenüber dem Roboterarm oder der Handhabungseinrichtung drehbar sind. Zwischenspeicher und/oder Applikationskopf werden erfindungsgemäß immer so gedreht bzw. geschwenkt, dass bei der Übergabe von der Zuführung zum Applikationskopf bzw. zur Andruckrolle ein Verwickeln und Verklemmen um die Roboterachsen vermieden wird. Da sich der Abstand zwischen dem vorzugsweise stationär angeordneten Zuführungs- und/oder Speichersystem während der Umlaufbewegung laufend verändert, werden auf der Zwischenspeicherrolle ausreichende Windungen der Dichtung aufgewickelt und auch entsprechend wieder abgewickelt. Bei einer beispielsweise konstanten Zuführgeschwindigkeit der Dichtung zur Zwischenspeicherrolle kann trotz des veränderten Abstandes zwischen der Zuführung und der Zwischenspeicherrolle die Dichtung immer in erforderlichem Maße stramm gehalten werden. Die Zwischenspeicherrolle kann fest an dem Applikationskopf angeordnet sein oder mit oder ohne Antrieb in beiden Richtungen bewegt werden oder mit Hilfe von Federelementen die erforderliche Zugspannung auf die Dichtung ausüben.

Die Zuführung der Dichtung zur Andruckrolle oder entsprechenden Andrückvorrichtungen wird durch vorzugsweise angetriebene und gegenüberliegende Führungsrollen oder über Zugmittel, z.B. Zahnriemen, auf entsprechenden Rollen erreicht, wobei die Führungsrollen einen einstellbaren Anpressdruck auf die Dichtung ausüben. Dieser definierte und einstellbare Anpressdruck kann insbesondere mit Hilfe einer pneumatisch oder hydraulisch gesteuerten Druckmembrane, die auf mindestens eine der Führungsrollen wirkt, oder durch Zugmittel auf Rollen ausgeführt werden. Die Zwischenspeicherrolle besitzt am Umfang verteilt am Außendurchmesser konisch, ballig oder zylindrisch ausgeführte Rollen, auf denen die Dichtung beim Aufrollen aufliegt. Durch die konischen Rollen beginnt das Aufrollen der Dichtung jeweils an einer Seite der Zwischenspeicherrolle. Auch hierdurch sind die Lage und die Führung der Dichtung genau definiert.

Der erfindungsgemäße bewegliche Applikationskopf zur umlaufenden Zuführung und Anbringung einer Dichtung entlang einer für die Anbringung vorgesehenen Linie besteht erfindungsgemäß aus einer fest- oder drehbaren am Applikationskopf befestigten Zwischenspeicherrolle, wobei die Rolle eine glatte zylindrische Oberfläche oder am Umfang angeordnete drehbare Rollen besitzen kann. Außerdem sind am Applikationskopf mindestens eine Andruckrolle und/oder entsprechende Andrückvorrichtungen für die Dichtung und antreibbare Führungsrollen zur Weiterleitung der Dichtung von der Zwischenspeicherrolle zur Andruckrolle vorhanden. Zusätzlich können auf diesem Wege zur Überwachung der Geschwindigkeit und der Position der Dichtung Sensoren und Positionsüberwachungseinrichtungen vorgesehen sein. Diese Positionsüberwachungseinrichtungen können in Transportrichtungen der Dichtung zwischen zwei angetriebenen Führungsrollen oder unmittelbar vor der Andruckrolle angeordnet sein.

Außerdem kann am Applikationskopf oder auch an der Zwischenspeicherrolle seitlich ein Führungsblech befestigt sein, auf dem getrennt von der Dichtung eventuell Versorgungsleitungen des Roboters oder der Handhabungseinrichtung aufliegen oder geführt werden.

Die Erfindung wird anhand der beigefügten Figuren 1 bis 8 beispielsweise näher erläutert.

Es zeigen:
- Figur 1: eine schematische Gesamtansicht einer Gesamtanlage zur Durchführung des erfindungsgemäßen Verfahrens,
- Figur 2: eine perspektivische Darstellung von Zwischenspeicher 13 und Applikationskopf 14,
- Figur 3: eine Seitenansicht zu Figur 2,
- Figur 4: eine perspektivische Ansicht des Zwischenspeichers 13,
- Figur 5: eine weitere perspektivische Ansicht des Zwischenspeichers 13,
- Figur 6: eine Seitenansicht des Zwischenspeichers 13,
- Figur 7: einen waagerechten Schnitt durch den Zwischenspeicher 13 nach Figur 6 und
- Figur 8: eine vergrößerte Schnittdarstellung der Zwischenspeicherrolle 10.

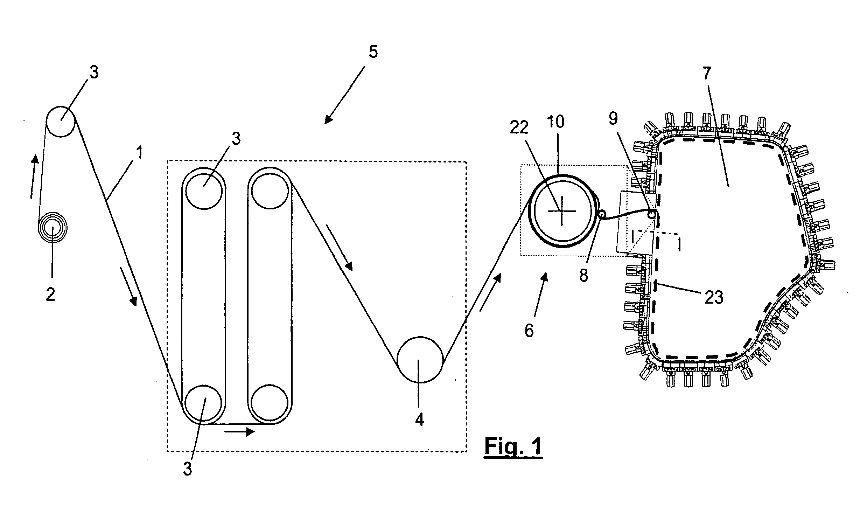

In Figur 1 ist der Verfahrensablauf zur Anbringung der Dichtung 1 an den Halteleisten 23 einer Applikationsplatte 7 prinzipiell dargestellt. Die Dichtung 1 wird von einer stationären Vorratsrolle 2 abgezogen und über Umlenkrollen 3 und gegebenenfalls auch Förderrollen 4 eines optionalen Speichersystems 5 dem Applikationssystem 6 zugeführt und von dort über Führungsrollen 8 und eine Andruckrolle 9 auf die am Umfang der Applikationsplatte (7) angeordneten Halteleisten 23 aufgebracht. Geeignete Halteleisten sind z.B. in der EP 0849106 B1 beschrieben. Nach umlaufender Befestigung der Dichtung 1 auf den in Figur 1 entlang der gestrichelten Linie angeordneten Halteleisten 23 wird die Dichtung 1 auf Maß abgeschnitten. Die beiden Dichtungsenden können in an sich bekannter Weise stumpf miteinander verbunden werden. Nach definierter Aufweitung der Dichtung durch Bewegung der einzelnen Halteleisten 23 nach außen kann die Dichtung 1 mit Hilfe der Applikationsplatte 7 in Position über den Klebeflächen der Kraftfahrzeugtür gebracht und anschließend nach Rückführung der Aufweitung mit nicht dargestellten Andrückelementen angeklebt werden.

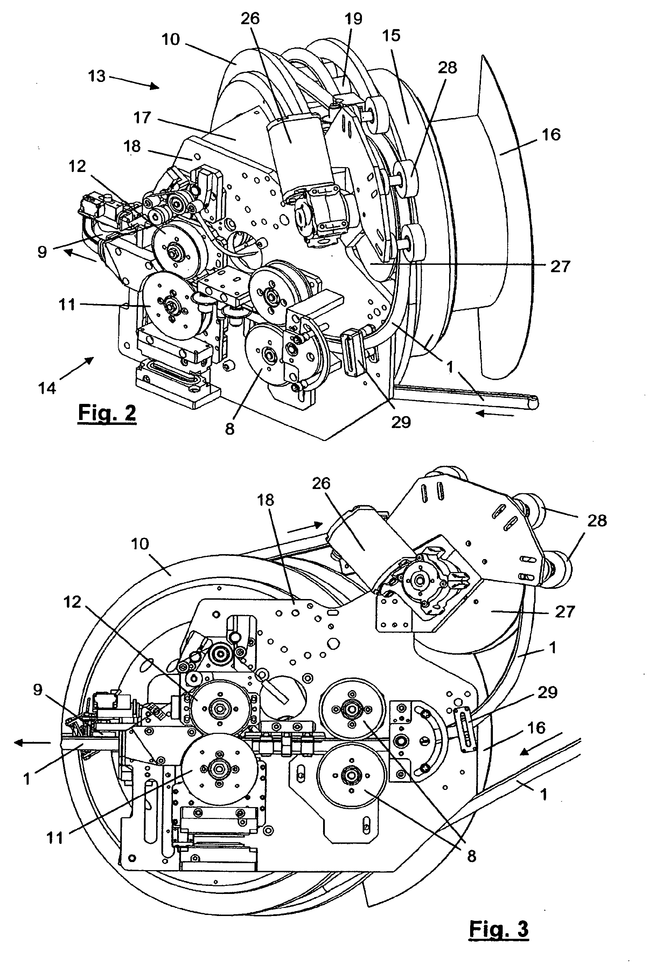

Zum Applikationssystem 6 gehört nach Figuren 2 und 3 einerseits der eigentliche Applikationskopf 14 und andererseits der Zwischenspeicher 13. An einer Tragplatte 18 sind dabei die soweit erforderlichen antreibbaren Führungsrollen 8, 11, 12 und 27 für die Dichtung 1 befestigt. Die Transportrichtung der Dichtung 1 ist in den Figuren 1 bis 5 jeweils mit einem Pfeil gekennzeichnet. Die Dichtung 1 wird von der Zwischenspeicherrolle 10 mit Hilfe der Führungsrolle 27, die den Antrieb 26 besitzt und den Anpressrollen 28 den weiteren Führungsrollen 8, 11 und 12 zugeführt. Zur Überwachung der Geschwindigkeit und der Position der Dichtung 1 sind Sensoren und Einrichtungen zur Positionsüberwachung 29 vor den Führungsrollen 8 und gegebenenfalls auch vor den Andruckrollen 9 vorgesehen. Mit den beiden gegenüberliegenden Führungsrollen 11, 12 wird die Dichtung 1 gezielt der Andruckrolle 9 zugeführt. Die beiden Führungsrollen 11 und 12 üben dabei einen definierten und gegebenenfalls einstellbaren Anpressdruck auf die Dichtung 1 aus, wobei der Anpressdruck mit Hilfe einer pneumatisch oder hydraulisch gesteuerten Druckmembrane ausgeführt wird. Auf der den Führungsrollen 8, 11 und 12 abgewandten Seite ist an der Tragplatte 18 ein Verbindungselement 17 angeschraubt, das wiederum durch Schrauben oder sonstige Befestigungselemente mit der Speichertrommel 15 verbunden ist.

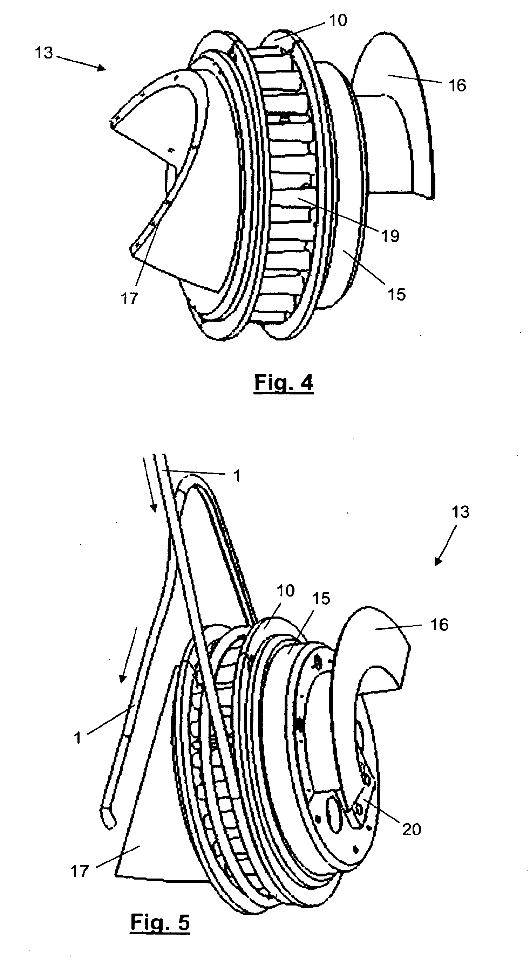

Nach den perspektivischen Darstellungen der Figuren 4 und 5 ist auf der dem Verbindungselement 17 abgewandten Seite der Speichertrommel 15 zusätzlich ein Führungsblech 16 z.B. für Roboterversorgungsleitungen oder sonstige Leitungen lösbar verbunden.

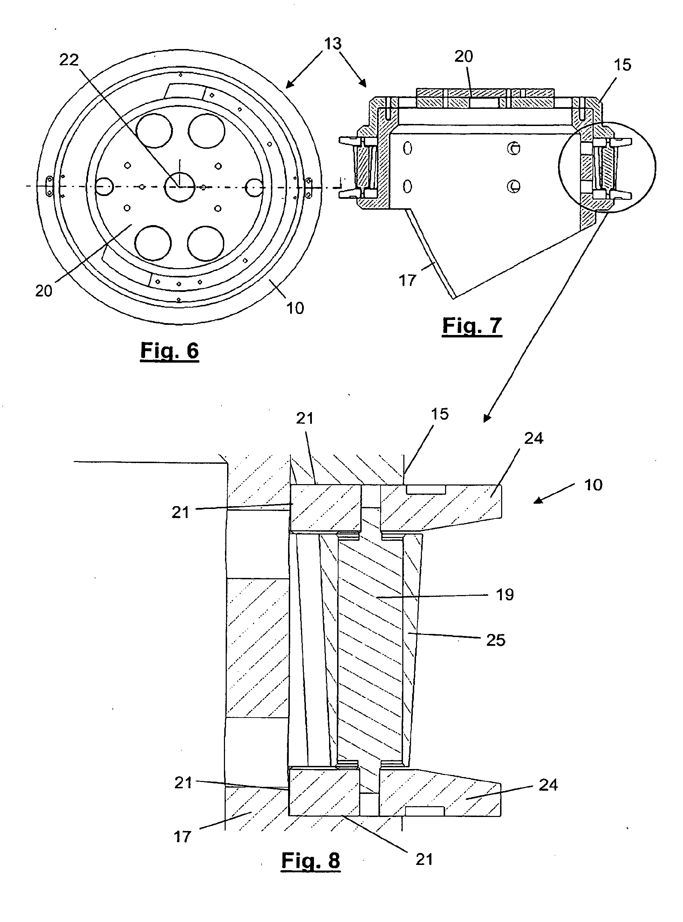

Gemäß Figuren 6 bis 8 ist die Zwischenspeicherrolle 10 mit ihrer Drehachse 22 gleitend auf der Speichertrommel 15 und gegenüber dem Verbindungselement 17 geführt. Die Gleitflächen 21 sind insbesondere aus Figur 8 ersichtlich. Dort ist auch zu sehen, dass die Zwischenspeicherrolle 10 aus zwei seitlichen Führungsringen 24 und diese verbindenden Rollen 19 besteht, wobei die Rollen 19 jeweils einen konischen Außenmantel 25 besitzen und in den Führungsringen 24 drehbar gelagert sind. Durch den konischen Außenmantel 25 wird gewährleistet, dass das Aufwickeln der Dichtung 1 auf der Zwischenspeicherrolle 10 an der Seite beginnt, wo der konische Außenmantel 25 bzw. die gesamte Zwischenspeicherrolle 10 den geringsten Durchmesser besitzt. Die Speichertrommel 15 wird über die Verbindungsplatte 20 an einen nicht dargestellten Roboterarm oder eine sonstige Handhabungseinrichtung angeschlossen, wobei mit dem Roboterarm oder der Handhabungseinrichtung der gesamte Applikationskopf 14(vergleiche Figuren 2 und 3) jeweils zusätzlich gedreht oder geschwenkt werden kann.

Statt an einer stationären Applikationsplatte 7 kann der Applikationskopf 14 mit der Zwischenspeicherrolle 10 auch direkt an der Klebefläche einer Kraftfahrzeugtür oder einer Türöffnung bzw. einer sonstigen Öffnung des Kraftfahrzeuges (z.B. am Rand einer Schiebedachöffnung) am Umfang entlang bewegt werden. Soweit hierbei die Dichtung direkt angeklebt wird, ist natürlich, vorzugsweise direkt vor dem Klebepunkt im Bereich der Andruckrolle 9 ein Abziehen des Schutzstreifens erforderlich.

### Bezugszeichenliste

- 1: Dichtung
- 2: Vorratsrolle
- 3: Umlenkrolle
- 4: Förderrolle
- 5: Speichersystem (optional)
- 6: Applikationssystem
- 7: Applikationsplatte
- 8: Führungsrolle
- 9: Andruckrolle
- 10: Zwischenspeicherrolle
- 11: Führungsrolle
- 12: Führungsrolle
- 13: Zwischenspeicher
- 14: Applikationskopf
- 15: Speichertrommel
- 16: Führungsblech (für Versorgungsleitungen)
- 17: Verbindungselement (zwischen 15 und 18)
- 18: Tragplatte (von 14)
- 19: Rollen (mit konischem Außenmantel 25)
- 20: Verbindungsplatte (an Roboterarm oder Handhabungseinrichtung)
- 21: Gleitflächen (zwischen 10 und 15 bzw. 17)
- 22: Drehachse (von 10)
- 23: Halteleisten (für 1 an 7)
- 24: Führungsringe
- 25: konischer Außenmantel (von 19)
- 26: Antrieb (für 27)
- 27: Führungsrolle (angetrieben)
- 28: Anpressrolle
- 29: Positionsüberwachungseinrichtung (für 1)

## Patentansprüche

1. Verfahren zum Anbringen einer ganz oder teilweise umlaufenden Dichtung (1) an einer Fahrzeugkarosserie, einem Fahrzeugteil oder an einer Applikationsplatte (7) zur anschließenden Anbringung vorzugsweise an einer Fahrzeugtür, das Verfahren ist **gekennzeichnet durch**,
a) die Dichtung (1) von einer Vorratsrolle (2) abgezogen,
b) mit mindestens einer Windung auf eine Zwischenspeicherrolle (10) aufgewickelt,
c) die Zwischenspeicherrolle (10) gemeinsam mit einem Applikationskopf (14) zum Anbringen der Dichtung (1) mit Hilfe einer Handhabungsvorrichtung oder eines Roboters entlang einer für die Anbringung der Dichtung (1) vorgesehenen Linie der Fahrzeugkarosserie, des Fahrzeugteiles oder der Applikationsplatte (7) bewegt,
d) die Dichtung (1) während der Umlaufbewegung von der Zwischenspeicherrolle (10) dem Applikationskopf (14) zugeführt und dort über Führungsmittel zur Führung der Dichtung (1) vor der Aufbringung und mit Hilfe einer Andruckrolle (9) oder einer ähnlich wirkenden Andrückvorrichtung auf die vorgesehene Fläche an der Fahrzeugkarosserie oder an dem Fahrzeugteil oder auf Halteleisten (23) an der Applikationsplatte (7) aufgerollt bzw. aufgesteckt und
e) bei der umlaufenden Anbringung die Dichtung (1) mittels der Zwischenspeicherrolle (10) oder am Umfang der Zwischenspeicherrolle (10) angeordneten Rollen (19) relativ zum Applikationskopf (14) bewegt und dabei die Dichtung (1) bedarfsabhängig zusätzlich auf - oder abgewickelt wird.

2. Verfahren nach Anspruch 1, **dadurch gekennzeichnet, dass** Applikationskopf (14) und Zwischenspeicherrolle (10) gemeinsam so geschwenkt und/oder gedreht werden, dass ein Kreuzen/Verwickeln oder Verklemmen der Dichtung (1) mit den Achsen des Roboters oder der Handhabungseinrichtung verhindert wird.

3. Verfahren nach Anspruch 1 oder 2, **dadurch gekennzeichnet, dass** die Zwischenspeicherrolle (10) motorisch oder mit Hilfe von Federelementen bewegt wird und die erforderliche Anzahl von Umdrehungen zum Auf- und/oder Abwickeln der Dichtung (1) ausführt.

4. Vorrichtung zum Anbringen einer ganz oder teilweise umlaufenden Dichtung (1) an einer Fahrzeugkarosserie, einem Fahrzeugteil oder einer Applikationsplatte (7) zur anschließenden Anbringung vorzugsweise an einer Fahrzeugtür, vorzugsweise zur Durchführung des Verfahrens nach einem der vorhergehenden Ansprüche **gekennzeichnet durch** einen an einem Roboterarm oder einer sonstigen Handhabungseinrichtung dreh- oder schwenkbar befestigten Applikationskopf (14) mit einer drehbar oder fest an dem Applikationskopf (14) befestigten Zwischenspeicherrolle (10) mit einer glatten zylindrischen Oberfläche oder am Umfang angeordneten drehbaren Rollen (19) zum Auf- und/oder Abrollen von ein oder mehreren Windungen der Dichtung (1), angetriebenen Führungsrollen (11, 12, 27) und einer Andruckrolle (9) oder ähnlich wirkenden Andrückvorrichtungen zur Zuführung und Anbringung der Dichtung (1).

5. Vorrichtung nach Anspruch 4, **gekennzeichnet durch** gegen die Dichtung (1) anpressbare Führungsrollen (11, 12) oder Zugmittel zwischen Rollen und/oder sonstige Transportmittel.

6. Vorrichtung nach Anspruch 5, **dadurch gekennzeichnet, dass** die Führungsrollen (11, 12) oder Zugmittel kraftveränderbar mit Hilfe einer pneumatisch oder hydraulisch gesteuerten Druckmembrane gegen die Dichtung (1) pressbar sind.

7. Vorrichtung nach Anspruch 4, **dadurch gekennzeichnet, dass** die an der Zwischenspeicherrolle (10) am Umfang angeordneten Rollen (19) konische, zylindrische oder ballige Außenmäntel besitzen, auf denen die Dichtung aufliegt bzw. abrollt.

8. Vorrichtung nach einem der Ansprüche 4 bis 7, **dadurch gekennzeichnet, dass** am Applikationskopf (14) seitlich ein Führungsblech (16) für Versorgungsleitungen befestigt ist.

9. Beweglicher Applikationskopf (14) zur Zuführung und Anbringung einer Dichtung (1) an einer Fahrzeugkarosserie, einem Fahrzeugteil oder einer Applikationsplatte (7) durch umlaufende Bewegung entlang einer für die Anbringung der Dichtung (1) vorgesehenen Linie **dadurch gekennzeichnet, dass** der bewegliche Applikationskopf aus
- einer fest oder drehbar am Applikationskopf (14) befestigten Zwischenspeicherrolle (10) mit einer glatten zylindrischen Oberfläche oder am Umfang drehbar angeordneten Rollen (19),
- einer Andrückrolle (9) oder ähnlich wirkenden Andrückvorrichtungen zum Zuführen und Anbringen der Dichtung (1) und
- für den Transport der Dichtung (1) von der Zwischenspeicherrolle (10) zur Andrückrolle (9) oder den entsprechenden Andrückeinrichtungen am Applikationskopf (14) befestigten angetriebenen Führungsrollen (8, 11, 12,27), besteht.

10. Beweglicher Applikationskopf (14) nach Anspruch 9 **gekennzeichnet durch** zwischen den angetriebenen Führungsrollen (8, 11, 12, 27) und/oder der Andrückrolle (9) angeordnete Sensoren oder sonstige Positionsüberwachungseinrichtungen (29) zur Überwachung und/oder Steuerung des gleichmäßigen Transportes der Dichtung (1).

## Claims

1. Method for attaching an entirely or partially revolving seal (1) to a vehicle body, a vehicle part or to an application plate (7) for subsequent attachment preferably to a vehicle door, the method being **characterized by**
a) the seal (1) being drawn off from a supply reel (2),
b) being wound up with at least one turn onto a temporary storage reel (10),
c) the temporary storage reel (10) being moved together with an application head (14) for attaching the seal (1) with the aid of a handling device or a robot along a line of the vehicle body, of the vehicle part or of the application plate (7), which line is provided for the attachment of the seal (1),
d) the seal (1) being supplied during the revolving movement from the temporary storage reel (10) to the application head (14) where the seal is rolled or put onto the designated surface on the vehicle body or on the vehicle part or on holding strips (23) on the application plate (7) via guide means for guiding the seal (1) prior to the application and with the aid of a pressure roller (9) or a similarly acting press-on device, and
e) during the revolving application, the seal (1) being moved relative to the application head (14) by means of the temporary storage reel (10) or rollers (19) arranged on the circumference of the temporary storage reel (10) and, in the process the seal (1) being additionally wound up or unwound depending on requirements.

2. Method according to Claim 1, **characterized in that** the application head (14) and temporary storage reel (10) are pivoted and/or rotated together in such a manner that the seal (1) is prevented from interlacing/entangling or becoming jammed with the axles of the robot or of the handling device.

3. Method according to Claim 1 or 2, **characterized in that** the temporary storage reel (10) is moved by motor or with the aid of spring elements and executes the required number of revolutions for winding up and/or unwinding the seal (1).

4. Device for attaching an entirely or partially revolving seal (1) to a vehicle body, a vehicle part or an application plate (7) for subsequent attachment preferably to a vehicle door, preferably for carrying out the method according to one of the preceding claims, **characterized by** an application head (14) fastened rotatably or pivotably to a robot arm or to another handling device, with a temporary storage reel (10) which is fastened rotatably or fixedly to the application head (14) and has a smooth cylindrical surface, or rotatable rollers (19) which are arranged on the circumference and are intended for rolling up and/or unrolling one or more turns of the seal (1), driven guide rollers (11, 12, 27) and a pressure roller (9) or similarly acting press-on devices for supplying and attaching the seal (1).

5. Device according to Claim 4, **characterized by** guide rollers (11, 12) which can be pressed against the seal (1), or traction means between rollers, and/or other transport means.

6. Device according to Claim 5, **characterized in that** the guide rollers (11, 12) or traction means can be pressed against the seal (1) in a force-variable manner with the aid of a pneumatically or hydraulically controlled pressure membrane.

7. Device according to Claim 4, **characterized in that** the rollers (19) arranged on the circumference of the temporary storage reel (10) have conical, cylindrical or convex outer casings on which the seal rests or rolls.

8. Device according to one of Claims 4 to 7, **characterized in that** a guide plate (16) for supply lines is fastened laterally to the application head (14).

9. Movable application head (14) for supplying and attaching a seal (1) to a vehicle body, a vehicle part or an application plate (7) by a revolving movement along a line provided for the attachment of the seal (1), **characterized in that** the movable application head consists of
- a temporary storage reel (10) which is fastened fixedly or rotatably to the application head (14) and has a smooth cylindrical surface or rollers (19) arranged rotatably on the circumference,
- a pressure roller (9) or similarly acting press-on devices for supplying and attaching the seal (1), and
- driven guide rollers (8, 11, 12, 27), which are fastened to the application head (14), for transporting the seal (1) from the temporary storage reel (10) to the pressure roller (9) or to the corresponding press-on devices.

10. Movable application head (14) according to Claim 9, **characterized by** sensors arranged between the driven guide rollers (8, 11, 12, 27) and/or the pressure roller (9), or other position monitoring devices (29) for monitoring and/or controlling the uniform transporting of the seal (1).

## Revendications

1. Procédé de montage d'un joint d'étanchéité (1) complètement ou partiellement périphérique sur une carrosserie de véhicule, une partie de véhicule ou une plaque d'application (7) pour le montage par raccordement de préférence sur une porte de véhicule, le procédé étant **caractérisé en ce que**
a) le joint d'étanchéité (1) est déroulé d'un rouleau de réserve (2),
b) est enroulé avec au moins un enroulement sur un rouleau de stockage intermédiaire (10),
c) le rouleau de stockage intermédiaire (10) est déplacé conjointement avec une tête d'application (14) pour le montage du joint d'étanchéité (1) à l'aide d'un dispositif de manipulation ou d'un robot le long d'une ligne de la carrosserie de véhicule, de la partie de véhicule ou de la plaque d'application (7) prévue pour le montage du joint d'étanchéité (1),
d) le joint d'étanchéité (1), pendant le mouvement de rotation du rouleau de stockage intermédiaire (10), est acheminé à la tête d'application (14) et y est enroulé ou enfiché, par le biais de moyens de guidage pour le guidage du joint d'étanchéité (1) avant l'application et à l'aide d'un rouleau de pressage (9) ou d'un dispositif de pressage agissant de manière similaire, sur la surface prévue sur la carrosserie de véhicule ou sur la partie de véhicule ou sur des baguettes de retenue (23) sur la plaque d'application (7), et
e) lors du montage périphérique, le joint d'étanchéité (1) est déplacé au moyen du rouleau de stockage intermédiaire (10) ou de rouleaux (19) disposés sur la périphérie du rouleau de stockage intermédiaire (10) par rapport à la tête d'application (14) et en l'occurrence le joint d'étanchéité (1) est en outre enroulé ou déroulé en fonction des besoins.

2. Procédé selon la revendication 1, **caractérisé en ce que** la tête d'application (14) et le rouleau de stockage intermédiaire (10) sont pivotés et/ou tournés en commun de manière à éviter un croisement/un mauvais enroulement ou un coincement du joint d'étanchéité (1) avec les axes du robot ou du dispositif de manipulation.

3. Procédé selon la revendication 1 ou 2, **caractérisé en ce que** le rouleau de stockage intermédiaire (10) est déplacé par un moteur ou à l'aide d'éléments de ressort et effectue le nombre requis de tours pour enrouler et/ou dérouler le joint d'étanchéité (1).

4. Dispositif de montage d'un joint d'étanchéité (1) complètement ou partiellement périphérique sur une carrosserie de véhicule, une partie de véhicule ou une plaque d'application (7) pour le montage par raccordement de préférence sur une porte de véhicule, de préférence pour mettre en oeuvre le procédé selon l'une quelconque des revendications précédentes, **caractérisé par** une tête d'application (14) fixée sur un bras de robot ou sur un autre dispositif de manipulation de manière rotative ou pivotante avec un rouleau de stockage intermédiaire (10) fixé de manière rotative ou fixe sur la tête d'application (14) avec une surface cylindrique lisse ou avec des rouleaux (19) rotatifs disposés sur la périphérie pour l'enroulement et/ou le déroulement d'un ou de plusieurs enroulements du joint d'étanchéité (1), des rouleaux de guidage entraînés (11, 12, 27) et un rouleau de pressage (9) ou des dispositifs de pressage agissant de manière similaire pour l'alimentation et le montage du joint d'étanchéité (1).

5. Dispositif selon la revendication 4, **caractérisé par** des rouleaux de guidage (11, 12) pouvant être pressés contre le joint d'étanchéité (1) ou des moyens de traction entre les rouleaux et/ou d'autres moyens de transport.

6. Dispositif selon la revendication 5, **caractérisé en ce que** les rouleaux de guidage (11, 12) ou les moyens de traction peuvent être pressés avec une force variable à l'aide d'une membrane de pression à commande pneumatique ou hydraulique contre le joint d'étanchéité (1).

7. Dispositif selon la revendication 4, **caractérisé en ce que** les rouleaux (19) disposés à la périphérie sur le rouleau de stockage intermédiaire (10) possèdent des enveloppes extérieures coniques, cylindriques ou bombées sur lesquelles repose ou roule le joint d'étanchéité.

8. Dispositif selon l'une quelconque des revendications 4 à 7, **caractérisé en ce qu'**une tôle de guidage (16) pour des lignes d'alimentation est fixée latéralement sur la tête d'application (14).

9. Tête d'application mobile (14) pour l'alimentation et le montage d'un joint d'étanchéité (1) sur une carrosserie de véhicule, une partie de véhicule ou une plaque d'application (7) par déplacement périphérique le long d'une ligne prévue pour le montage du joint d'étanchéité (1), **caractérisée en ce que** la tête d'application mobile se compose
- d'un rouleau de stockage intermédiaire (10) fixé de manière fixe ou rotative sur la tête d'application (14) avec une surface cylindrique lisse ou des rouleaux (19) disposés de manière rotative sur la périphérie,
- d'un rouleau de pressage (9) ou de dispositifs de pressage agissant de manière similaire pour l'alimentation et le montage du joint d'étanchéité (1) et
- de rouleaux de guidage (8, 11, 12, 27) entraînés, fixés sur la tête d'application (14) pour le transport du joint d'étanchéité (1) du rouleau de stockage intermédiaire (10) au rouleau de pressage (9) ou aux dispositifs de pressage correspondants.

10. Tête d'application mobile (14) selon la revendication 9, **caractérisée par** des capteurs ou d'autres dispositifs de contrôle de position (29) disposés entre les rouleaux de guidage entraînés (8, 11, 12, 27) et/ou le rouleau de pressage (9), pour contrôler et/ou commander le transport régulier du joint d'étanchéité (1).
